(19) Europäisches Patentamt

European Patent Office

Office européen des brevets

(11) **EP 0 544 182 B1**

(12) **EUROPÄISCHE PATENTSCHRIFT**

(45) Veröffentlichungstag und Bekanntmachung des Hinweises auf die Patenterteilung:
**07.05.1997 Patentblatt 1997/19**

(51) Int Cl.6: **C08G 81/02**, C08K 5/14,
C09D 5/02, C09D 5/44

(21) Anmeldenummer: **92119671.3**

(22) Anmeldetag: **19.11.1992**

(54) **Polymere Umsetzungsprodukte**

Polymeric reaction products

Produits de réaction polymériques

(84) Benannte Vertragsstaaten:
**AT BE CH DE DK ES FR GB IT LI NL PT SE**

(30) Priorität: **23.11.1991 DE 4138586**

(43) Veröffentlichungstag der Anmeldung:
**02.06.1993 Patentblatt 1993/22**

(73) Patentinhaber: **BASF Lacke + Farben AG**
**48165 Münster-Hiltrup (DE)**

(72) Erfinder:
• **Faul, Dieter, Dr.**
**W-6702 Bad Duerkheim (DE)**
• **Hoffmann, Gerhard, Dr.**
**W-6701 Otterstadt (DE)**
• **Huemke, Klaus, Dr.**
**W-6701 Friedelsheim (DE)**
• **Heimann, Ulrich, Dr.**
**W-4400 Muenster (DE)**
• **Gilbert, John A., Dr.**
**Beverly Hills, MI 48025 (US)**

(74) Vertreter: **Langfinger, Klaus-Dieter, Dr. et al**
**BASF Aktiengesellschaft,**
**Patentabteilung ZDX - C 6**
**67056 Ludwigshafen (DE)**

(56) Entgegenhaltungen:
EP-A- 0 385 300          EP-A- 0 432 923
EP-A- 0 475 228

**Beschreibung**

Die vorliegende Erfindung betrifft polymere Umsetzungsprodukte, welche erhältlich sind durch Umsetzen von

I) Präpolymerisaten, erhältlich aus

A) Polyoxyalkylenen mit einem mittleren Molekulargewicht $\overline{M}_n$ von 140 bis 10.000, welche im Mittel 1,5 bis 3,0

$a_1$) primäre und/oder sekundäre Aminogruppen oder

$a_2$) Epoxidgruppen

pro Molekül enthalten und

B) Polymerisaten auf der Basis von konjugierten Dienen mit einem mittleren Molekulargewicht $\overline{M}_n$ von 250 bis 50.000, welche im Mittel 1,5 bis 3,0

$b_1$) primäre und/oder sekundäre Aminogruppen oder

$b_2$) Epoxidgruppen

pro Molekül enthalten, wobei jeweils die Komponenten ($a_1$) und ($b_2$) oder ($a_2$) und ($b_1$) so miteinander umgesetzt werden, daß pro Epoxidequivalent der Komponenten ($a_2$) bzw. ($b_2$) 1,05 bis 3,0 Aminoequivalente der Komponenten ($a_1$) bzw. ($b_1$) vorhanden sind,

II) mindestens einer unter Energiezufuhr Radikale bildenden Verbindung.

Ferner betrifft diese Erfindung Verfahren zur Herstellung dieser polymeren Umsetzungsprodukte sowie die Verwendung derselben in Elektrotauchlackierbädern.

Um Metallteile zu beschichten, wird, insbesondere in der Automobilindustrie, das kathodische Elektrotauchlackierverfahren immer häufiger angewandt. Dabei werden kathodisch abscheidbare Kunstharze benötigt, die den beschichteten Gegenstand vor Korrosion schützen. Gleichzeitig sollten die erhaltenen Überzuge elastisch sein, um nicht durch Schläge beschädigt zu werden. Darüber hinaus sollten die Überzüge, auch nachdem sie getrocknet oder ausgehärtet sind, Kanten so ausreichend bedecken, daß diese exponierten Stellen nicht korrodieren.

Reaktionsprodukte aus Epoxidgruppen enthaltenden Polymerisaten und Aminogruppen enthaltenden Copolymerisaten auf der Basis von Butadien und Acrylnitril werden in der EP-A2-385 300 beschrieben. Aus der EP-A-475 228 sind Kunstharze bekannt, die durch die Umsetzung von Aminogruppen enthaltenden Polyoxyalkylenen und Polymerisaten auf der Basis konjugierter Diene erhältlich sind. Zwar weisen gehärtete Überzüge, die derartige Harze enthalten gute mechanische Eigenschaften auf, doch bedecken sie Kanten nur unzureichend. Deren Schutz vor Korrosion bleibt daher unbefriedigend.

Der EP-A1-381 347 sind Mischungen aus einer wäßrigen Dispersion eines kationischen Harzes mit dispergierten vernetzten Mikrogelteilchen zu entnehmen. Die Mikrogelteilchen können dadurch erhalten werden, daß Polymere, die Amino-, Thio- oder aktivierte Methylengruppen aufweisen mit Polymerisaten, die $\alpha,\beta$-ungesättigte Carbonylfunktionen haben, umgesetzt werden. Die aus diesen Mischungen hergestellten Überzüge schützen zwar Kanten besser vor Korrosion, sind jedoch nicht schlagfest.

Aufgabe der vorliegenden Erfindung war es daher Systeme zu entwickeln, aus denen Überzüge hergestellt werden können, die schlagfest sind und gleichzeitig neben allgemeiner Korrosionsfestigkeit insbesondere sehr guten Korrosionsschutz an Kanten aufweisen.

Demgemäß wurden die eingangs definierten Umsetzungsprodukte gefunden.

Diese polymeren Umsetzungsprodukte sind dadurch erhältlich, daß Präpolymerisate (I) mit mindestens einer Radikale bildenden Verbindung (II) umgesetzt werden. Dabei werden im allgemeinen 0,1 bis 20 Gew.-%, bezogen auf das Feststoffgehalt der Präpolymerisate (I), bevorzugt 0,5 bis 10, insbesondere 1 bis 5 Gew.-% an Komponente (II) verwendet.

Die Präpolymerisate (I) sind erhältlich aus Polyoxyalkylenen (A) und Polymerisaten auf der Basis konjugierter Diene (B).

Als Komponente (A) eignen sich Polyoxyalkylenderivate, die ein mittleres Molekulargewicht $\overline{M}_n$ von 140 bis 10.000, vorzugsweise 300 bis 6000 haben, wobei der Bereich von 350 bis 2000 besonders bevorzugt ist. Die Polyoxyalkylenderivate weisen im Mittel 1,5 bis 3,0, vorzugsweise 1,8 bis 2,2 primäre und/oder sekundäre Aminogruppen (Kompo-

nente (a$_1$)) oder 1,5 bis 3,0, vorzugsweise 2 Epoxidgruppen (Komponente (a$_2$)) pro Molekül auf.

Diese Polyoxyalkylenderivate können linear oder verzweigt sein. Außerdem sind Polyoxyalkylenderivate geeignet, die verschiedene Oxyalkylengruppen in der Kette enthalten. Als geeignete Polyoxyalkylenderivate kommen solche Verbindungen in Betracht, deren Alkylenanteil 1 bis 12 Kohlenstoffatome enthält. Die Herstellung solcher Amino- oder Epoxidgruppen-tragenden Polyoxyalkylene ist allgemein bekannt und geht beispielsweise aus von der Polymerisation von Ethylenoxid, Propylenoxid, Tetrahydrofuran oder anderen cyclischen Ethern. Anschließend können die so erhaltenen Hydroxylgruppen-enthaltenden Polyoxyalkylene beispielsweise durch Michael-Addition von Acrylnitril mit anschließender Hydrierung der Nitrilgruppe oder durch direkte Umsetzung mit Ammoniak in Aminogruppen-enthaltenden Polyoxyalkylene (a$_1$) überführt werden. Die Epoxidgruppen-enthaltende Polyoxyalkylene (a$_2$) lassen sich z.B. durch teilweise bzw. vollständige Epoxidierung der Hydroxylgruppen-tragenden Polyoxyalkylene herstellen.

Besonders bevorzugte Aminogruppen-tragende Polyoxyalkylene (a$_1$) sind solche, die in $\alpha$-Stellung zu einer primären Aminogruppe unsubstituierte Methylengruppen aufweisen wie Bis-(2-aminoethyl)-polyethylenoxid, Bis-(3-aminopropyl)-polypropylenoxid oder vorzugsweise Bis-(2-aminoethyl)-polybutylenoxid oder Bis-(3-aminopropyl)-polybutylenoxid.

Zu den bevorzugten Epoxidgruppen-tragenden Polyoxyalkylenen (a$_2$) zählen Polyoxyethylenepoxide, Polyoxypropylenepoxide und insbesondere Polyoxybutylenepoxide.

Als Komponente (B) kommen Polymerisate auf der Basis von konjugierten Dienen mit einem mittleren Molekulargewicht $\overline{M}_n$ von 250 bis 50.000 in Betracht, welche im Mittel 1,5 bis 3,0, insbesondere 1,8 bis 2,2 primäre und/oder sekundäre Aminogruppen (Komponente (b$_1$)) oder Epoxidgruppen (Komponente (b$_2$)) pro Molekül enthalten. Bevorzugte Polymerisate (B) haben ein mittleres Molekulargewicht $\overline{M}_n$ von 1000 bis 10.000. Ganz besonders bevorzugt werden Polymerisate mit einem mittleren Molekulargewicht von 2000 bis 6000

Derartige Polymerisate auf der Basis von konjugierten Dienen können unter allgemein bekannten Bedingungen durch radikalische Polymerisation erhalten werden. Als Dienmonomere kommen beispielsweise Isopren oder Butadien in Betracht, wobei Butadien bevorzugt ist.

Der Anteil an Comonomeren kann dabei im allgemeinen je nach Art des Comonomeren bis zu 45 Gew.-%, bezogen auf das Gesamtgewicht an Monomeren, betragen, wobei der Anteil an Comonomeren so bemessen wird, daß die Glasübergangstemperatur des entstehenden Copolymerisates im Bereich von -70 bis -30°C liegt.

Bevorzugt werden Butadien-Acrylnitril-Copolymere mit einem Acrylnitrilgehalt von 5 bis 45 Gew.-%, wobei ein Acrylnitrilgehalt von 10 bis 30 Gew.-% besonders bevorzugt wird.

Die Aminogruppen- oder Epoxidgruppen-tragenden Polymerisate lassen sich beispielsweise ausgehend von carboxylfunktionalisierten Polymeren z.B. auf der Basis von Butadien wie Carboxylgruppen-enthaltende Butadien-Acrylnitril-Copolymere herstellen. Wie bekannt können die Carboxylgruppen beispielsweise dadurch in das Polymere eingeführt werden, daß bei der Polymerisation ein carboxylgruppenhaltiger Radikalwie carboxyliertes Azoisobutyronitril verwendet wird.

Die aminogruppen-haltigen Polymerisate (b$_1$) lassen sich dann beispielsweise durch Umsetzung der carboxylfunktionalisierten Polymeren mit Diaminen erhalten. Größtenteils kommerziell erhältlich sind z.B. aminogruppenhaltige Butadien-Acrylnitril-Copolymere.

Weiterhin kann man Aminogruppen-tragende Polymerisate (b$_1$) auch durch partielle Hydrierung von Butadien-Acrylnitril-Copolymeren herstellen oder durch Addition von primären Aminen an epoxidgruppenhaltige Butadien-Acrylnitril-Copolymere.

Die carboxyfunktionalisierten Polymere lassen sich durch Umsetzen mit Polyglycidylethern, die im Mittel 1,5 bis 3,0 Epoxidgruppen enthalten, wobei Diglycidylether bevorzugt sind, in die entsprechenden Epoxidgruppen-enthalten-den Polymerisate (b$_2$) überführen.

Geeignete Polyglycidylether sind beispielsweise die Diglycidylether von aliphatischen $C_2$-$C_{18}$-Diolen wie Ethylenglykol, Propylenglykol, Butandiol, Pentandiol oder Hexandiol oder Polyglycidylether von mindestens zwei phenolische Hydroxylgruppen enthaltenden ein- oder mehrkernigen aromatischen Verbindungen wie beispielsweise Hydrochinon, 2,2-Bis-(4-hydroxyphenyl)-propan (Bisphenol A), Bis-(4-hydroxyphenyl)-methan (Bisphenol F), 4,4'-Dihydroxybenzophenon, 4,4'-Dihydroxybenzosulfon oder 1,5-Dihydroxynaphthalin.

Solche Glycidylether lassen sich im allgemeinen durch Veretherung mit Epihalohydrin im alkalischen Medium herstellen.

Darüber hinaus können die Epoxidgruppen-enthaltenden Polymerisate (b$_2$) auch hergestellt werden, indem zunächst die boxylfunktionalisierten Polymere mit Ethylenoxid umgesetzt werden. Die so erhaltenen hydroxygruppenhaltigen Polymere können dann beispielsweise durch Reaktion mit Epihalohydrin im alkalischen Medium epoximodifiziert werden.

Erfindungsgemäß werden die Präpolymere (I) durch Umsetzen der Komponente (a$_1$) und der Komponente (b$_2$) oder der Komponente (a$_2$) mit der Komponente (b$_1$) erhalten. Die Mengen der Komponenten werden dabei so bemessen, daß pro Epoxidequivalent der Komponente (a$_2$) bzw. (b$_2$) 1,05 bis 3,0, vorzugsweise 1,3 bis 2,3 Aminoequivalente der Komponente (a$_1$) bzw. (b$_1$) vorhanden sind.

Die Umsetzung der Polyoxyalkylene ($a_1$) bzw. ($a_2$) mit den Polymerisaten auf der Basis konjugierter Diene ($b_2$) bzw. ($b_1$) zu den Präpolymerisaten (I) wird in der Regel so durchgeführt, daß man jeweils die beiden Komponenten in einem organischen Lösungsmittel oder Lösungsmittelgemisch, welches sich sowohl gegenüber Amino- als auch Epoxidgruppen inert verhält, bei Temperaturen von 20 bis 150°C, vorzugsweise 50 bis 110°C, umsetzt. Als Lösungsmittel kommen dabei z.B. in Betracht Toluol, Xylol, Benzol, Methylisobutylketon und Tetrahydrofuran. Das bevorzugte Lösungsmittel ist Toluol.

Die Reaktionszeit kann zwischen 1 und 16 Stunden liegen, wobei der Endpunkt der Reaktion dann erreicht ist, wenn der Epoxidwert praktisch gleich Null ist, was im Einzelfall leicht ermittelt werden kann.

Üblicherweise erfolgt die Umsetzung unter Normaldruck.

Die so erhaltenen Präpolymerisate (I) haben im allgemeinen Aminzahlen von 10 bis 100 mg, vorzugsweise 20 bis 60 mg KOH/g Testsubstanz.

Die mittleren Molekulargewichte $\overline{M}_n$ der Präpolymerisate (I) können von etwa 500 bis 150.000 betragen.

Zur weiteren Umsetzung können die Präpolymerisate (I) von organischem Lösungsmittel befreit oder, wie es bevorzugt wird, in Lösung verwendet werden.

Erfindungsgemäß ist die Komponente (II) eine unter Energiezufuhr radikalbildende Verbindung oder eine Mischung unterschiedlicher derartiger Radikalspender. Geeignet sind vor allem Verbindungen, die unter thermischer Belastung Radikale erzeugen.

Als Komponente (II) sind z.B. organische Peroxide wie Di-t.-butylperoxid, Dicumylperoxid, t.-Butylperbenzoat, t.-Butylperoctoat, Lauroylperoxid, t.-Butylperpivalat oder Azoverbindungen wie Azodiisobutyrodinitril geeignet. Ebenfalls geeignet sind elementarer Schwefel, Schwefelspender wie Dimorpholyldisulfid, 2-Morpholinodithiobenzothiazol, Dipentamethylenthiuramtetrasulfid, Caprolactamdisulfid, N-Oxydiethylendithiocarbamyl-N'-oxydiethylensulfenamid, Tetramethylthiuramdisulfid, sowie Mischungen aus elementarem Schwefel, Schwefelspendern und Organozinkverbindungen.

Besonders bevorzugt werden organische Peroxide verwendet, darunter t-Butylperbenzoat, t-Butylperoctoat, t-Butylperpivalat und Lauroylperoxid. Eine weitere bevorzugte Verbindung, die als Komponente (II) eingesetzt werden kann, ist Azodiisobutyronitril.

Bei der Umsetzung der Komponenten (I) und (II) werden in der Regel 0,1 bis 20 Gew.-%, vorzugsweise 0,5 bis 10 Gew.-%, insbesondere 1 bis 5 Gew.-%, bezogen auf den Feststoffgehalt von (I), des Radikalspenders (II) eingesetzt.

In der Regel wird die Umsetzung der Präpolymere (I) mit der Komponente (II) nach einer der nachstehenden Methoden (M1) bis (M3) durchgeführt.

Methode (M1)

Die Komponenten (I) und (II) werden in einem organischen Lösungsmittel oder Lösungsmittelgemisch, welches sich gegenüber Aminogruppen inert verhält, gemischt und anschließend bei Temperaturen von etwa 20 bis etwa 150°C, vorzugsweise etwa 60 bis ca. 130°C umgesetzt. Dabei beträgt die Reaktionszeit im allgemeinen mehr als 0,5 Stunden und weniger als 20 Stunden. Danach werden die Aminogruppen des erfindungsgemäßen polymeren Umsetzungsproduktes ganz oder teilweise mit Säure neutralisiert und das protonierte Produkt mit Wasser dispergiert. Es ist auch möglich das polymere Umsetzungsprodukt in ein Wasser-Säure-Gemisch zu geben und dann zu dispergieren. Anschließend können die organischen Lösungsmittel azeotrop abdestilliert werden. Das so erhaltene erfindungsgemäße polymere Umsetzungsprodukt kann dann beispielsweise anderen Kunstharzen beigemischt oder, wie es bevorzugt wird, einem Elektrotauchlackierbad zugesetzt werden.

Methode (M2)

Die Komponenten (I) und (II) in einem organischen Lösungsmittel oder Lösungsmittelgemisch werden gemischt und die Aminogruppen ganz oder teilweise mit Säure neutralisiert. Anschließend wird die protonierte Mischung mit Wasser dispergiert. Es ist aber auch möglich die Mischung aus (I) und (II) in ein Wasser-Säure-Gemisch zu geben und dann zu dispergieren. Die wäßrige Dispersion wird über einen Zeitraum von in der Regel mehr als 0,5 Stunden bis etwa 5 Stunden auf eine Temperatur von ca. 40 bis ca. 100°C erhitzt. Anschließend können die organischen Lösungsmittel azeotrop abdestilliert werden. Das so erhaltene erfindungsgemäße polymere setzungsprodukt kann dann beispielsweise anderen Kunstharzen beigemischt oder, wie es bevorzugt wird, einem Elektrotauchlackierbad zugesetzt werden.

Methode (M3)

Die Komponente (I) und (II) in einem organischen Lösungsmittel oder Lösungsmittelgemisch werden gemischt und wie unter (M2) beschrieben dispergiert. Anschließend können die organischen Lösungsmittel azeotrop abdestilliert werden. Die erhaltene wäßrige Dispersion wird als solche weiterverwendet. Sie kann beispielsweise einem Elektrotauchlackierbad zugegeben werden, wobei die Umsetzung der Komponenten (I) und (II) erst bei der thermischen Behandlung des abgeschiedenen Überzuges erfolgt.

Zu den organischen Lösungsmitteln die in den vorstehend beschriebenen Umsetzungen verwendet werden können zählen Benzol, Toluol, Xylol, sec.-Butanol, n-Butanol und insbesondere Isobutanol.

Als Säuren kommen anorganische Säuren wie Phosphorsäure, bevorzugt jedoch organische Säuren, darunter Ameisensäure, Essigsäure, Propionsäure und Milchsäure, in Betracht. Bevorzugt werden Essigsäure und Milchsäure eingesetzt. Es können auch Mischungen verschiedener derartiger Säuren verwendet werden.

Die besonders bevorzugte Methode nach der (I) mit (II) umgesetzt wird ist Methode (M2).

Die nach Methode (M1), (M2) oder (M3) erhaltenen wäßrigen Dispersionen weisen in der Regel einen Feststoffgehalt von 15 bis 40 % auf und können wie oben erwähnt Elektrotauchlackierbädern zugesetzt werden.

Die Umsetzungsprodukte werden bei Elektrotauchlackierbädern in einer Menge von 1 bis 40 Gew. %, bezogen auf den Gesamtpolymergehalt des Elektrotauchbades, verwendet.

Dabei werden die wäßrigen Dispersionen in Mengen von 5 bis 30 Gew.-%, vorzugsweise 8 bis 20 Gew.-%, bezogen auf den Polymergehalt des Elektrotauchbades, verwendet.

Geeignete Elektrotauchlackierbäder enthalten als Grundharze basische Polymere, die als basische Gruppen primäre, sekundäre oder tertiäre Aminogruppen tragen. Es lassen sich auch Grundharze verwenden, die Phosphonium- oder Sulfoniumgruppen tragen. In aller Regel enthalten diese Grundharze zusätzlich noch funktionelle Grupen, z.B. Hydroxylgruppen oder ungesättigte Doppelbindungen.

Als derartige Grundharze, deren Molmasse vorzugsweise zwischen 2000 und 200 000 liegt, kommen Polymerisate, z.B. Aminoacrylat- und -methacrylatharze, Polyaddukte wie polyurethanharze und Polykondensate wie Aminoepoxidharze in Betracht.

Für Lackgrundierungen mit guten Korrosionsschutzeigenschaften werden als Grundharze bevorzugt Aminoepoxidharze eingesetzt. Aminoepoxidharze sind beispielsweise in der EP-A 134 983, der EP-A 165 556, der EP-A 167 029 oder in der DE-A 34 22 457 oder der DE-A 34 44 410 beschrieben.

Man erhält sie in an sich üblicher Weise durch Umsetzung von epoxidgruppenhaltigen Harzen mit gesättigten und/oder ungesättigten primären und/oder sekundären Aminen bzw. Aminoalkoholen. Als Epoxidharze kommen Verbindungen mit im Mittel 1,5 bis 3, bevorzugt 2 Epoxidgruppen pro Molekül und mittleren Molekulargewichten von 300 bis 6000 in Betracht. Vor allem eignen sich Glycidylether von im Mittel 2 Hydroxygruppen im Molekül enthaltenden Polyphenolen, wobei als Phenolkomponente vor allem 2,2-Bis-(4-hydroxyphenyl)-propan (Bisphenol A) in Betracht kommt.

Epoxidharze mit höherem Molekulargewicht erhält man durch Umsetzung der oben genannten Diglycidylether mit einem Polyphenol wie 2,2-Bis-(4-hydroxyphenyl)-propan und weitere Umsetzung der so erhaltenen Produkte mit Epichlorhydrin zu Polyglycidylethern.

Das Aminoepoxidharz kann auch mit gesättigten oder ungesättigten Polycarbonsäuren modifiziert sein, beispielsweise mit Adipinsäure, Fumarsäure oder dimerer Fettsäure.

Man kann auch Grundharze verwenden, die zusätzlich mit halbblockierten Isocyanaten umgesetzt worden sind und selbstvernetzende Eigenschaften haben. Solche Harze sind beispielsweise in der EP-A-273 247 oder der US 4 692 503 beschrieben.

Falls die Grundharze keine selbstvernetzenden Gruppen tragen, muß vor dem Dispergieren noch ein Vernetzer zugesetzt werden.

Geeignete Vernetzer für diese Grundharze sind z.B. stoffkondensationsprodukte wie sie in der DE-A 33 11 514 beschrieben sind oder phenolische Mannich-Basen gemäß der DE-A 34 22 457. In der EP-A 134 983 werden als weitere mögliche Vernetzer auch geblockte Isocyanate oder Aminoplastharze wie Harnstoff-Formaldehydharze, Melaminharze oder Benzoguanaminharze erwähnt.

Weiterhin können die Elektrotauchlackierbäder noch Pigmentpasten und übliche Hilfsmittel enthalten. Pigmentpasten sind beispielsweise aus einem Reibharz und Pigmenten wie Titandioxid, Ruß oder Aluminiumsilikaten sowie Hilfs- und Dispergiermitteln erhältlich. Geeignete Reibharze sind beispielsweise in der EP-A 107 089 oder der EP-A 251 772 beschrieben.

Die Abscheidung der Lackfilme bei der kathodischen Elektrotauchlackierung erfolgt üblicherweise bei 20-35°C, vorzugsweise 25 bis 32°C, während 5-500 sec, vorzugsweise 60 bis 300 sec bei Abscheidespannungen von 50 - 500 V. Der zu beschichtende Gegenstand wird als Kathode geschaltet.

Anschließend können die Lackfilme bei Temperaturen im Bereich von 120-210°C, vorzugsweise 140 bis 180°C eingebrannt werden.

Nach elektronenmikroskopischen Untersuchungen weisen die kathodisch abgeschiedenen Überzüge eine zweiphasige Struktur auf, wobei die erfindungsgemäßen polymeren Umsetzungsprodukte Domänen innerhalb der Lackmatrix ausbilden. Die Größe dieser Domänen liegt im allgemeinen zwischen 50 nm und 2 μm.

Beispiele

1. Herstellung der Präpolymeren ($I_1$) und ($I_2$)

Präpolymeres ($I_1$)

Als Komponente ($b_1$) wurde ein Butadien-Acrylnitril-Copolymeres mit einem mittleren Molekulargewicht $\overline{M}_n$ von 3500 und einer Aminzahl von 64 mg KOH/g Festsubstanz verwendet, das durch Reaktion von 2-Aminoethylpiperazin mit Carboxylgruppen terminierten Butadien-Acrylnitril-Copolymeren mit einem Acrylnitrilgehalt von 16 Gew.-% hergestellt wurde.

1519 g der Komponente ($b_1$) wurden unter ständigem Rühren in 772 g Toluol gelöst und mit 282 g eines Polyoxybutylendiglycidylethers ($a_2$) mit einem Epoxidequivalentgewicht von ca. 420 versetzt. Anschließend wurde 5 Stunden bei 100°C gerührt, wobei der Endpunkt der Reaktion durch einen Epoxidwert von nahezu Null angezeigt wurde. Das so erhaltene Produkt ($I_1$) hatte eine Aminzahl von 54,8 mg KOH/g Festsubstanz. Das Präpolymere ($I_1$) wurde mit 428,9 g Isobutanol verdünnt und als diese Lösung wie unter 2. beschrieben eingesetzt.

Präpolymeres ($I_2$)

Als Komponente ($b_2$) wurde ein Epoxidgruppen-tragendes Butadien-Acrylnitril-Copolymeres verwendet. Zu dessen Herstellung wurden 203 g eines Carboxylgruppen terminierten Butadien-Acrylnitril-Copolymeren mit einem mittleren Molekulargewicht $\overline{M}_n$ von 3600 und einem Acrylnitril-Gehalt von 17 Gew.-% mit 376 g eines Bisphenol-A-Diglycidylethers mit einem Epoxidequivalentgewicht von ca. 190 unter Rühren gemischt. Anschließend wurde 5,5 Stunden bei 130°C gerührt, wobei der Endpunkt der Reaktion bei einer Säurezahl < 1 mg KOH/g Festsubstanz erreicht war.

533,3 g der Komponente ($b_2$) wurden in 302 g Toluol gelöst und unter Rühren mit 170,4 g eines Bis-(3-aminopropyl) polyoxybutylens ($a_1$) mit einem mittleren Molekulargewicht $\overline{M}_n$ von 750 versetzt. Anschließend wurde 7 Stunden bei 100°C gerührt, wobei der Endpunkt der Reaktion durch einen Epoxidwert von nahezu Null angezeigt wurde. Das so erhaltene Produkt ($I_2$) hatte eine Aminzahl von 35 mg KOH/g Festsubstanz und wurde wie unter 2. beschrieben weiter eingesetzt.

2. Herstellung der erfindungsgemäßen wäßrigen Dispersionen (D1)-(D12)

Methode ($M_1$)

Dipsersion (D1)

416,66 g der Lösung des Präpolymeren ($I_1$) wurden mit 83,34 g Isobutanol verdünnt und unter Rühren mit 5,0 g t-Butylperbenzoat vermischt. Die Mischung wurde 1 Stunde bei 75°C gerührt. Das erfindungsgemäße polymere Umsetzungsprodukt ($P_1$) hatte eine Aminzahl von 55 mg KOH/g Festsubstanz.

Die so erhaltene Lösung von ($P_1$) in Isobutanol wurde mit 8,3 g Essigsäure neutralisiert und anschließend bei 40°C mit 750 g deionisiertem Wasser dispergiert. Danach wurde das organische Lösungsmittel so weit wie möglich azeotrop abdestilliert und gleichzeitig so viel deionisiertes Wasser zugegeben, daß die erhaltene Dispersion (D1) einen Feststoffgehalt von 25 % aufwies.

Dispersion (D2)

357,1 g der Lösung des Präpolymeren ($I_2$) wurden mit 59,5 g Isobutanol verdünnt und unter ständigem Rühren mit 5 g t-Butylperoctoat versetzt. Die Mischung wurde 9 Stunden bei 80°C gerührt. Während dieser Zeit wurden nochmals insgesamt 5 g t-Butylperoctoat portionsweise zugegeben. Das erfindungsgemäße polymere Umsetzungsprodukt ($P_2$) hatte eine Aminzahl von 35 mg KOH/g Festsubstanz.

Die so erhaltene Lösung von ($P_2$) in Isobutanol wurde mit 6,0 g Essigsäure neutralisiert und anschließend bei 40°C mit 583 g deionisiertem Wasser dispergiert. Danach wurde das organische Lösungsmittel so weit wie möglich unter vermindertem Druck azeotrop abdestilliert und gleichzeitig soviel deionisiertes Wasser zugegeben, daß die erhaltene Dispersion (D2) einen Feststoffgehalt von 29 % aufwies.

Methode (M$_2$)

Allgemeine Vorschrift zur Herstellung der Dispersionen (D3)-(D6)

Die Lösung der Präpolymeren (I$_1$) bzw. (I$_2$) wurden in den in Tabelle 2 angegebenen Mengen mit t-Butylperoctoat als Komponente (II) vermischt, mit Essigsäure neutralisiert und anschließend bei 40°C mit der angegebenen Menge deionisiertem Wasser codispergiert. Danach wurde unter vermindertem Druck das organische Lösungsmittel so weit wie möglich azeotrop abdestilliert und gleichzeitig durch Zugabe deionisierten Wassers der Feststoffgehalt der jeweiligen Dispersion eingestellt. Die so erhaltenen Dispersionen wurden für die in Tabelle 1 angegebene Dauer auf 90°C erhitzt.

Tabelle 1

| Dispersion | D3 | D4 | D5 | D6 |
|---|---|---|---|---|
| Menge Präpolymerisatlösung [g] | I$_1$ 500 | I$_1$ 500 | I$_1$ 500 | I$_2$ 700 |
| Menge Radikalspender (II) [g] | 7,5 | 5,0 | 2,5 | 12,25 |
| Essigsäure [g] | 8,8 | 8,8 | 8,8 | 10,4 |
| Wasser [g] | 750 | 750 | 750 | 1260 |
| Reaktionszeit [h] | 3 | 2 | 2 | 2,5 |
| Feststoffgehalt [Gew.-%] | 23,5 | 23,5 | 23,5 | 27,1 |

Methode (M$_3$)

Allgemeine Vorschrift zur Herstellung der Dispersionen (D7)-(D12)

Die Lösung der Präpolymeren (I$_1$) bzw. (I$_2$) wurden in den in Tabelle 2 angegebenen Mengen mit der entsprechenden in der Tabelle angegebenen Komponente (II) vermischt, mit Essigsäure neutralisiert und anschließend mit der angegebenen Menge deionisiertem Wasser codispergiert. Danach wurde das organische Lösungsmittel so weit wie möglich azeotrop abdestilliert und gleichzeitig durch Zugabe deionisierten Wassers der Festgehalt der jeweiligen Dispersion eingestellt.

Tabelle 2

| Dispersion | D7 | D8 | D9 | D10 | D11 | D12 |
|---|---|---|---|---|---|---|
| Menge ]g] | A1 342,8 | A2 285,7 | A1 342,8 | A1 500 | A1 333,3 | A2 400 |
| Radikalbildner (II) [g] | [1] ... | [1] ... | [2] 4,0 | [3] 7,5 | [4] 4,0 | [4] 4,0 |
| Essigsäure [g] | 5,95 | 3,5 | 5,9 | 7,48 | 5,77 | 4,56 |
| Wasser [g] | 600 | 514 | 600 | 700 | 600 | 400 |
| Feststoffgehalt [Gew.-%] | 29,9 | 31,8 | 24,5 | 29,0 | 30,1 | 26,9 |

[1] Schwefelrezeptur: 3,4 g elementarer Schwefel, 0,6 g Dipentamethylenthiuramtetrasulfid, 1 g Zinkstearat

[2] Azodiisobutyronitril

[3] t-Butylperbenzoat

[4] t-Butylperoctoat

3. Vergleichsdispersionen (VD1) und (VD2)

Zum Vergleich wurden die Präpolymerisate (I$_1$) und (I$_2$) in Abwesenheit der Komponente (II) dispergiert und die so erhaltenen Dispersionen Elektrotauchlackierbädern zugegeben.

Vergleichsdispersion (VD1)

1200 g der Lösung des Präpolymerisates (I$_1$) wurden mit 21,2 g Essigsäure neutralisiert und anschließend bei 40°C mit 2160 g deionisiertem Wasser dispergiert. Danach wurde unter vermindertem Druck das organische Lösungsmittel so weit wie möglich azeotrop abdestilliert und gleichzeitig so viel deionisiertes Wasser zugegeben, daß die erhaltene Dispersion (VD1) einen Feststoffgehalt von 22,9 % aufwies.

Vergleichsdispersion (VD2)

785,7 g der Lösung des Präpolymerisates ($I_2$) wurden mit 11,7 g Essigsäure neutralisiert und anschließend bei 40°C mit 1414 g deionisiertem Wasser dispergiert. Danach wurde das organische Lösungsmittel so weit wie möglich unter vermindertem Druck azeotrop abdestilliert und gleichzeitig so viel deionisiertes Wasser zugegeben, daß die erhaltene Dispersion (VD2) einen Feststoffgehalt von 29,8 % aufwies.

4. Elektrotauchlackierbäder Herstellung der Elektrotauchlackierbad-Komponenten Herstellung des Grundharzes

Ein Gemisch aus 5800 g Hexamethylendiamin, 7250 g Dimerfettsäure und 1400 g Leinölfettsäure wurde langsam auf 195°C erhitzt, wobei das entstehende Wasser (540 g) abdestilliert wurde. Anschließend wurde das Gemisch auf 100°C abgekühlt und mit 5961 g Toluol auf einen Festgehalt von 70 Gew.% verdünnt. Das Vorprodukt hatte eine Aminzahl von 197 mg KOH/g Substanz.

In einem zweiten Rührgefäß wurden 10 Equivalente eines Diglycidylethers auf Basis von Bisphenol A und Epichlorhydrin mit einem Equivalentgewicht von 485 in einem sungsmittelgemisch aus 1039 g Toluol und 1039 g Isobutanol unter Erwärmen gelöst. Die so entstandene Lösung wurde auf 60°C gekühlt und mit 300,4 g Methylethanolamin und 128 g Isobutanol versetzt, wobei die Temperatur innerhalb von 5 min auf 78°C anstieg. Danach wurden 1850 g des Vorproduktes zugegeben und die Mischung 2 Stunden auf 80°C erwärmt und so das Grundharz erhalten.

Herstellung der Pigmentpaste

Zu 525,8 g des Grundharzes wurden 168,7 g Butylglykol, 600 g Wasser und 16,5 g Essigsäure gegeben. Dann wurden 800 g Titandioxid, 11 g Ruß und 50 g basisches Bleisilicat zugegeben und die Mischung auf einer Kugelmühle bis zu einer Korngröße kleiner 9 μm gemahlen. Anschließend wurde mit Wasser ein Feststoffgehalt von 47 Gew.% eingestellt.

Herstellung des Vernetzers

Eine Mischung aus 1,32 kg Toluol, 0,42 kg Trimethylolpropan und 0,72 kg Bisphenol A wurde bei 60°C so lange gerührt, bis eine homogene Lösung entstanden war. Diese Lösung wurde zu einem auf 60°C erwärmten Gemisch aus 3,45 kg Isophorondiisocyanat, 0,86 kg Toluol und 0,0034 kg Dibutylzinndilaurat gegeben. Das Gemisch wurde 2 h bei einer Temperatur von 60°C gehalten und dann mit 2,0 kg Dibutylamin versetzt, wobei die Zugabegeschwindigkeit so eingestellt wurde, daß die Temperatur des Reaktionsgemisches 80°C nicht überstieg. Anschließend wurden 1,11 kg Toluol zugegeben und noch 1 h bei 80°C gehalten.

4.2 Herstellung der Elektrotauchlackierbäder E1 bis E12 und (V0) bis (V2)

Allgemeine Arbeitsvorschrift

700 g des Grundharzes und 300 g des Vernetzers wurden unter Zusatz von 19 g Essigsäure mit soviel Wasser dispergiert, daß man eine Dispersion mit einem Feststoffgehalt von 31 Gew.% erhielt. Anschließend wurden organische Lösungsmittel als Azeotrop abdestilliert und danach mit Wasser ein Feststoffgehalt von 35 Gew.% eingestellt.

Die so erhaltene Grundharz-Vernetzer-Dispersion (G.-V.-Disp.) wurde mit 775 g der Pigmentpaste und wechselnden Mengen der erfindungsgemäßen Dispersionen (D1) bis (D12) bzw. den Vergleichsdispersionen (VD1) oder (VD2) vermischt und mit Wasser auf ein Volumen von 5000 ml aufgefüllt.

Die Elektrotauchlackierbäder wurden 168 Stunden bei 30°C gerührt. An kathodisch geschalteten zinkphosphatierten Prüftafeln aus Stahl wurden innerhalb von 120 Sekunden Lackfilme abgeschieden. Anschließend wurden diese Lackfilme 20 min bei 155°C eingebrannt. Diese Lackfilme dienten als Grundierungen für die Herstellung von dreischichtigen Überzügen zur Bestimmung der Steinschlagfestigkeit nach MBE (Mercedes-Benz-Einzelsteinschlagtest).

Die Zusammensetzung der Bäder, die Abscheidebedingungen und die Prüfergebnisse der Lackgrundierungen sind in Tabelle 3 aufgelistet.

5. Herstellung von dreischichtigen Überzügen zur Bestimmung der Steinschlagfestigkeit nach MBE

Auf die gemäß 4.2 erhaltenen kathodisch abgeschiedenen Grundierungen wurden durch Spritzapplikation zunächst eine Füllschicht und anschließend eine Decklackschicht aufgebracht. Für die Füllschicht wurde ein Füller auf Polyestermelaminharzbasis (z.B. Füller FC 80-100 der Fa. BASF) mit einer Schichtdicke von 35 bis 40 µm aufgebracht und 25 min bei 155°C eingebrannt.

Für die Decklackschicht wurde ein Zwei-Komponenten-High Solid Decklack auf Polyesterpolyolisocyanatbasis (z. B. Decklack FD 73-0782 (2K-HS) der Fa. BASF) verwendet, der bei einer Schichtdicke von 35 bis 40 µm 30 min bei 130°C eingebrannt wurde.

An den so erhaltenen dreischichtigen Überzügen wurde die Steinschlagfestigkeit nach MBE (Mercedes-Benz-Einzelsteinschlagtest) ermittelt. Die Ergebnisse sind in Tabelle 3 aufgelistet.

Tabelle 3
Anwendungstechnische Prüfungen

| Bsp. (Nr.) erfindungsgemäß | G.-V.-Disp. [g] | Disp. [g] | Dips. (Nr.) | U [V] | SD [μm] | ET [mm] | RT [Nm] | MBE (-) [mm$^2$/R] | SST [Uw/KR] |
|---|---|---|---|---|---|---|---|---|---|
| E1 | 1638 | 551 | (D1) | 400 | 20,2 | 9,9 | 6,8 | 2,5/0,5 | 1,0/2 |
| E2 | 1638 | 467 | (D2) | 400 | 23,9 | 7,9 | 3,4 | 3,3/3,0 | 0,75/0 |
| E3 | 1638 | 592 | (D3) | 380 | 22,5 | 8,0 | 6,8 | 4,5/1,0 | 1,0/0 |
| E4 | 1638 | 592 | (D4) | 380 | 21,4 | 9,3 | 15,8 | 5,0/1,0 | 0,95/0 |
| E5 | 1638 | 592 | (D5) | 400 | 20,5 | 8,2 | 10,2 | 4,0/1,0 | 1,1/0 |
| E6 | 1638 | 512 | (D6) | 400 | 22,9 | 10,0 | 13,6 | 3,0/1,0 | 1,1/0 |
| E7 | 1616 | 455 | (D7) | 360 | 21,5 | 6,8 | 2,8 | 3,0/0,0 | 1,6/4 |
| E8 | 1616 | 428 | (D8) | 360 | 25,4 | 9,7 | 11,3 | 3,0/1,5 | 1,5/4 |
| E9 | 1617 | 556 | (D9) | 400 | 28,2 | 7,7 | 7,9 | 3,5/1,0 | 1,0/4 |
| E10 | 1638 | 469 | (D10) | 400 | 22,5 | 7,9 | 6,8 | 4,0/1,0 | 0,75/1 |
| E11 | 1638 | 453 | (D11) | 400 | 24,6 | 8,4 | 6,8 | 2,7/1,0 | 0,75/3 |
| E12 | 1638 | 506 | (D12) | 390 | 25,6 | 8,7 | 6,8 | 5,5/0,0 | 0,9/3 |
| zum Vergleich | | | | | | | | | |
| V0 | 1974 | - | (-) | 400 | 25,1 | 6,1 | 1,1 | 7,0/5,0 | 1,5/>5 |
| V1 | 1638 | 595 | (VD1) | 400 | 22,5 | 7,6 | 5,7 | 2,7/1,0 | 1,65/5 |
| V2 | 1638 | 457 | (VD2) | 390 | 24,1 | 9,8 | 11,3 | 4,0/2,0 | 1,65/5 |

U    Abscheidespannung

SD    Schichtdicke

ET    Erichsentiefung

RI    Reverse Impact, Schlagtiefung; Bestimmung mit einem mandrel impact tester der Fa. Gardner nach ASTM D 2794

SST   360 Stunden Salzsprühtest auf blankem Blech, $U_w$: Unterwanderung in mm nach DIN 50 021; KR: Kantenrostgrad in Notenstufen 0 (kein Rost) bis 5 (sehr stark verrostet)

MBE   Mercedes-Benz-Einzelsteinschlagtest bei einer Prüftemperatur von $-20$°C; DIN 55 995, Verfahren A; Fa. Erichsen Technische Beschreibung Modell 490 (1981);

**Patentansprüche**

1. Polymere Umsetzungsprodukte, welche erhältlich sind durch Umsetzen von

   I) Präpolymerisaten erhältlich aus

   A) Polyoxyalkylenen mit einem mittleren Molekulargewicht $\overline{M}_n$ von 140 bis 10.000, welche im Mittel 1,5 bis 3,0

   $(a_1)$ primäre und/oder sekundäre Aminogruppen oder

   $(a_2)$ Epoxidgruppen

   pro Molekül enthalten und

   B) Polymerisaten auf der Basis von konjugierten Dienen mit einem mittleren Molekulargewicht $\overline{M}_n$ von 250 bis 50.000, welche im Mittel 1,5 bis 3,0

   $b_1)$ primäre und/oder sekundäre Aminogruppen oder

   $b_2)$ Epoxidgruppen

   pro Molekül enthalten, wobei jeweils die Komponenten $(a_1)$ und $(b_2)$ oder $(a_2)$ und $(b_1)$ so einander umgesetzt werden, daß pro Epoxidequivalent der Komponenten $(a_2)$ bzw. $(b_2)$ mindestens ein Aminoequivalentüberschuß bis 3 noequivalente der Komponenten $(a_1)$ bzw. $(b_1)$ vorhanden sind mit

   II) mindestens einer Radikale bildenden Verbindung.

2. Polymere Umsetzungsprodukte nach Anspruch 1, erhältlich durch Umsetzen der Präpolymerisate (I) mit 0,1 bis 20 Gew.-%, bezogen auf den Feststoffgehalt der Präpolymerisate (I), mindestens einer Verbindung (II).

3. Polymere Umsetzungsprodukte nach Anspruch 1 oder in denen die Polyoxyalkylene (A) Polyoxybutylene sind.

4. Polymere Umsetzungsprodukte nach den Ansprüchen 1 bis 3, in denen die Polymerisate (B) Butadien-Acrylnitril-Copolymere mit einem Acrylnitrilgehalt von 5 bis 45 Gew.-% sind.

5. Polymere Umsetzungsprodukte nach den Ansprüchen 1 bis 4, in denen die Verbindung (II) ausgewählt ist aus der Gruppe Azodiisobutyrodinitril, t-Butylperbenzoat, t-Butylperoctoat, t-Butylperpivalat und Lauroylperoxid.

6. Verfahren zur Herstellung polymerer Umsetzungsprodukte gemäß den Ansprüchen 1 bis 5, dadurch gekennzeichnet, daß man

   I) Präpolymerisaten, erhältlich aus

   A) Polyoxyalkylenen mit einem mittleren Molekulargewicht $\overline{M}_n$ von 140 bis 10.000, welche im Mittel 1,5 bis 3,0

   $a_1)$ primäre und/oder sekundäre Aminogruppen oder

   $a_2)$ Epxoxidgruppen

   pro Molekül enthalten und

   B) Polymerisaten auf der Basis von konjugierten Dienen mit einem mittleren Molekulargewicht $\overline{M}_n$ von 250 bis 50.000, welche im Mittel 1,5 bis 3,0

   $b_1)$ primäre und/oder sekundäre Aminogruppen oder

b$_2$) Epoxidgruppen

pro Molekül enthalten, wobei jeweils die Komponenten (a$_1$) und (b$_2$) oder (a$_2$) und (b$_1$) so einander umgesetzt werden, daß pro Epoxidequivalent der Komponenten (a$_2$) bzw. (b$_2$) mindestens ein Aminoequivalentüberschuß bis 3 noequivalente der Komponenten (a$_1$) bzw. (b$_1$) vorhanden sind,

II) mit mindestens einer unter Energiezufuhr Radikale bildenden Verbindung umsetzt.

7. Verfahren zur Herstellung polymerer Umsetzungsprodukte gemäß den Ansprüchen 1 bis 5, dadurch gekennzeichnet, daß man die Präpolymerisate (I) mit Säure ganz oder teilweise neutralisiert, anschließend zusammen mit der Verbindung (II) dispergiert und bei einer Temperatur von 40 bis 100°C umsetzt.

8. Verwendung der Umsetzungsprodukte gemäß den Ansprüchen 1 bis 5 als Zusätze zu Elektrotauchlackierbädern.

9. Elektrotauchlackierbäder, enthaltend, bezogen auf deren Gesamtpolymergehalt, 1 bis 40 Gew.-% der polymeren Umsetzungsprodukte gemäß den Ansprüchen 1 bis 5.

10. Mittels kathodischer Elektrotauchlackierung beschichteter Gegenstand, erhältlich unter Verwendung eines Elektrotauchlackierbades gemäß Anspruch 9.


## Claims

1. A polymeric reaction product which is obtainable by reacting

   I) prepolymers obtainable from

   A) polyoxyalkylenes which have an average molecular weight $\overline{M}_n$ of from 140 to 10,000 and contain on average from 1.5 to 3.0

   a$_1$) primary or secondary amino groups or
   a$_2$) epoxy groups

   per molecule and
   B) polymers which are based on conjugated dienes, have an average molecular weight $\overline{M}_n$ of from 250 to 50,000 and contain on average from 1.5 to 3.0

   b$_1$) primary or secondary amino groups or
   b$_2$) epoxy groups

   per molecule, the components (a$_1$) and (b$_2$) or (a$_2$) and (b$_1$) being reacted with one another so that from at least an amino equivalent excess to 3 amino equivalents of component (a$_1$) or (b$_1$) are present per epoxide equivalent of component (a$_2$) or (b$_2$), with

   II) at least one compound which forms free radicals.

2. A polymeric reaction product as claimed in claim 1, obtainable by reacting the prepolymer (I) with from 0.1 to 20% by weight, based on the solids content of the prepolymer (I), of at least one compound (II).

3. A polymeric reaction product as claimed in claim 1 or 2, wherein the polyoxyalkylene (A) is a polyoxybutylene.

4. A polymeric reaction product as claimed in any of claims 1 to 3, wherein the polymer (B) is a butadiene/acrylonitrile copolymer having an acrylonitrile content of from 5 to 45% by weight.

5. A polymeric reaction product as claimed in any of claims 1 to 4, wherein the compound (II) is selected from the group consisting of azobisisobutyronitrile, tert-butyl perbenzoate, tert-butyl peroctoate, tert-butyl perpivalate and lauroyl peroxide.

6. A process for the preparation of a polymeric reaction product as claimed in any of claims 1 to 5, wherein

I) prepolymers obtainable from

A) polyoxyalkylenes which have an average molecular weight $M_n$ of from 140 to 10,000 and contain on average from 1.5 to 3.0

$a_1$) primary or secondary amino groups or
$a_2$) epoxy groups

per molecule, and
B) polymers which are based on conjugated dienes, have an average molecular weight $M_n$ of from 250 to 50,000 and contain on average from 1.5 to 3.0

$b_1$) primary or secondary amino groups or
$b_2$) epoxy groups

per molecule, the components ($a_1$) and ($b_2$) or ($a_2$) and ($b_1$) being reacted with one another so that from at least an amino equivalent excess to 3 amino equivalents of component ($a_1$) or ($b_1$) are present per epoxide equivalent of component ($a_2$) or ($b_2$),

are reacted with
II) at least one compound which forms free radicals when energy is supplied.

7. A process for the preparation of a polymeric reaction product as claimed in any of claims 1 to 5, wherein the prepolymer (I) is partially or completely neutralized with an acid, then dispersed together with the compound (II) and reacted at from 40 to 100°C.

8. Use of a reaction product as claimed in any of claims 1 to 5 as an additive to electrocoating baths.

9. An electrocoating bath containing from 1 to 40% by weight, based on the total polymer content of said bath, of a polymeric reaction product as claimed in any of claims 1 to 5.

10. An article which is coated by cathodic electrocoating and is obtainable using an electrocoating bath as claimed in claim 9.


**Revendications**

1. Produits de réaction polymères, que l'on peut obtenir par réaction

I) de prépolymérisats, que l'on peut obtenir à partir

A) de polyoxyalkylènes ayant un poids moléculaire moyen $\overline{M}_n$ de 140 à 10 000, qui contiennent par molécule en moyenne de 1,5 à 3,0

$a_1$) groupements amino primaires et/ou secondaires ou

$a_2$) groupements époxyde et

B) de polymérisats à base de diènes conjugués ayant un poids moléculaire moyen $\overline{M}_n$ de 250 à 50 000, qui contiennent par molécule en moyenne de 1,5 à 3,0

$b_1$) groupements amino primaires et/ou secondaires ou

$b_2$) groupements époxyde,

les composants ($a_1$) et ($b_2$) ou ($a_2$) et ($b_1$) ayant réagi les uns avec les autres à chaque fois de telle manière que, par équivalent époxyde des composants (a$_2$), respectivement (b$_2$), soient présents d'au moins un excès d'équivalent amino jusqu'à 3 équivalents amino des composants (a$_1$), respectivement (b$_1$), avec

II) au moins un composé formant des radicaux.

2. Produits de réaction polymères selon la revendication 1, que l'on peut obtenir par réaction des prépolymérisats (I) avec de 0,1 à 20 % en poids, par rapport à la teneur en matières solides des prépolymérisats (I), d'au moins un composé (II).

3. Produits de réaction polymères selon la revendication 1 ou 2, dans lesquels les polyoxyalkylènes (A) sont le polyoxybutylène.

4. Produits de réaction polymères selon les revendications 1 à 3, dans lesquels les polymérisats (B) sont des copolymères butadiène-acrylonitrile ayant une teneur en acrylonitrile de 5 à 45 % en poids.

5. Produits de réaction polymères selon les revendications 1 à 4, dans lesquels le composé (II) est choisi parmi le groupe azodiisobutyrodinitrile, perbenzoate de t-butyle, peroctoate de t-butyle, perpivalate de t-butyle et peroxyde de lauroyle.

6. Procédés de préparation de produits de réaction polymères selon les revendications 1 à 5, caractérisés en ce que l'on fait réagir

I) des prépolymérisats, que l'on peut obtenir à partir

A) de polyoxyalkylènes ayant un poids moléculaire moyen $\overline{M}_n$ de 140 à 10 000, qui contiennent par molécule en moyenne de 1,5 à 3,0

a$_1$) groupements amino primaires et/ou secondaires ou

a$_2$) groupements époxyde et

B) de polymérisats à base de diènes conjugués ayant un poids moléculaire moyen $\overline{M}_n$ de 250 à 50 000, qui contiennent par molécule en moyenne de 1,5 à 3,0

b$_1$) de groupements amino primaires et/ou secondaires ou

b$_2$) de groupements époxyde,

les composants (a$_1$) et (b$_2$) ou (a$_2$) et (b$_1$) ayant réagi les uns avec les autres à chaque fois de telle manière que, par équivalent époxyde des composants (a$_2$), respectivement (b$_2$), soient présents d'au moins un excès d'équivalent amino jusqu'à 3 équivalents amino des composants (a$_1$), respectivement (b$_1$),

II) avec au moins un composé formant des radicaux.

7. Procédé de préparation des produits de réaction polymères selon les revendications 1 à 5, caractérisés en ce que l'on procède à la neutralisation complète ou partielle des prépolymérisats (I) avec un acide, à la mise en dispersion subséquente de ces derniers conjointement au composé (II) et à leur mise en réaction à une température de 40 à 100°C.

8. Utilisation des produits de réaction polymères selon les revendications 1 à 5 en tant qu'additifs à des bains de laquage par électrodéposition.

9. Bains de laquage par électrodéposition, contenant, par rapport à leur teneur globale en polymères, de 1 à 40 % en poids des produits de réaction polymères selon les revendications 1 à 5.

10. Article revêtu à l'aide de l'électrolaquage cathodique, que l'on peut obtenir par utilisation d'un bain de laquage par électrodéposition selon la revendication 9.